# EUROPÄISCHE PATENTANMELDUNG

(11) **EP 2 230 609 A2**
(43) Veröffentlichungstag der Anmeldung: **22.09.2010**
(21) Anmeldenummer: 10154074.8
(22) Anmeldetag: 19.02.2010
(51) Int. Cl.: G06F 17/27

(54) **Verfahren zum Erstellen von Anforderungsspezifikationen für Prozessleitsysteme der Kraftwerksleittechnik**

(30) Priorität: 04.03.2009 DE 102009011724
(71) Anmelder: SIEMENS AKTIENGESELLSCHAFT, 80333 München (DE)
(72) Erfinder: Chrobok-Diening, Gunther, 82205, Gilching (DE); Kleyer, Dieter, 91074, Herzogenaurach (DE)

(57) **Zusammenfassung**

Die Erfindung geht aus von einem Verfahren zum Unterstützen der Erstellung einer Anforderungsbeschreibung eines Prozessleitsystems der Kraftwerksleittechnik.

Zum Herstellen einer technisch klaren Anforderungsbeschreibung eines Prozessleitsystems der Kraftwerkstechnik wird vorgeschlagen, dass eine textlich formulierte Anforderungsbeschreibung auf die Einhaltung von zuvor festgelegten und auf die Technik des Prozessleitsystems ausgerichteter Formulierungsregeln überprüft wird und gemäß der Formulierungsregeln technisch mehrdeutige Textstellen zur Überarbeitung ausgegeben werden.

## Beschreibung

Die Erfindung betrifft ein Verfahren zum Unterstützen der Erstellung einer Anforderungsbeschreibung eines Prozessleitsystems der Kraftwerksleittechnik.

Der Funktionsumfang moderner Prozessleitsysteme in der Kraftwerksleittechnik steigt beständig und beträgt heute ein Vielfaches von dem älterer Systeme. Zum Funktionsumfang von Prozessleitsystemen in der Kraftwerksleittechnik lassen sich so genannte nicht funktionale Merkmale, wie Reaktionszeit, Wartungsfreundlichkeit oder Fehlertoleranz, angeben. Die Menge dieser nicht funktionalen Merkmale vergrößert sich ebenso wie der Funktionsumfang. Infolgedessen hat sich die Komplexität der bis heute technisch realisierten Systeme deutlich erhöht. Es ist zu erwarten, dass diese Entwicklung auch in Zukunft anhält, wenn nicht sogar zunimmt.

Zu Beginn der Entwicklung eines Prozessleitsystems in der Kraftwerksleittechnik, also eines Software- und Hardwaregestützten Steuerungssystems zur Steuerung eines Kraftwerks, wird eine so genannte Anforderungsbeschreibung erstellt. Diese soll die Anforderungen des Kunden oder des Marktes an den Funktionsumfang und an die nichtfunktionalen Merkmale des zu entwickelnden Prozessleitsystems eines Kraftwerks festlegen. Die Anforderungsbeschreibung legt fest, was das Prozessleitsystem in der Kraftwerkstechnik leisten soll und in welcher Weise es dies für den Anwender leisten soll.

Im weiteren Verlauf der Entwicklung eines Prozessleitsystems für ein Kraftwerk werden dann auf Basis der Anforderungsbeschreibungen so genannte funktionale Spezifikationen erstellt. In diesen können neben den funktionalen auch nichtfunktionale Merkmale spezifiziert werden. Sie berücksichtigen die Kunden- und Marktanforderungen und spezifizieren und detaillieren diese im Gegensatz zur Anforderungsbeschreibung aus technischer Sicht und berücksichtigen existierende technische Randbedingungen. Eine funktionale Spezifikation legt fest, wie und in welcher Weise das Prozessleitsystem des Kraftwerks funktionieren soll.

Die Anforderungsbeschreibung und die schon technisch genauere funktionale Spezifikation eines Prozessleitsystems sind in einer menschlichen Sprache und in Textform niedergelegt. Ingenieurwesen und Informatik haben zudem formale und halbformale Modellierungssprachen entwickelt, um Funktion und Verhalten präzise zu spezifizieren. Durch solche Modellierungssprachen lassen sich spezielle Aspekte präziser als in normaler textlicher Beschreibung ausdrücken. Sie sind ein weiteres Beschreibungswerkzeug, ohne jedoch textlich formulierte Anforderungen überflüssig zu machen.

Es ist eine Aufgabe der vorliegenden Erfindung, ein Verfahren anzugeben, mit dem das Erstellen einer technisch klaren Anforderungsbeschreibung eines Prozessleitsystems der Kraftwerkstechnik unterstützt werden kann.

Diese Aufgabe wird durch ein Verfahren der eingangs genannten Art gelöst, bei dem eine textlich formulierte Anforderungsbeschreibung erfindungsgemäß auf die Einhaltung von zuvor festgelegten und auf die Technik des Prozessleitsystems ausgerichteter Formulierungsregeln überprüft wird und gemäß der Formulierungsregeln technisch mehrdeutige Textstellen zur Überarbeitung ausgegeben werden. Hierdurch kann die Restfehleranzahl im Prozessleitsystem der Kraftwerkstechnik reduziert werden und Missverständnisse und Fehlinterpretationen bei der Entwicklung des Prozessleitsystems können vermieden werden.

Die Erfindung geht hierbei von der Überlegung aus, dass Anforderungsbeschreibungen von Prozessleitsystemen der Kraftwerksleittechnik bisher in der Regel gänzlich in Textform sprachlich formuliert sind. Hierbei finden sich sowohl einzelne Sätze als auch ganze Absätze unterschiedlicher Länge zur Beschreibung von verschiedenen Anforderungen. Eine solche textlich formulierte frühe Fassung einer Anforderungsbeschreibung kann als freie Textanforderung bezeichnet werden. Es ist zu erwarten, dass auch in Zukunft Anforderungsbeschreibungen noch komplexerer Prozessleitsysteme als freie Textanforderungen geschrieben sind, da ausreichende Kompetenz zu Modellierungssprachen nicht bei allen beteiligten Personengruppen vorausgesetzt werden kann und nach wie vor Akzeptanzprobleme gegenüber formalen und halbformalen Modellierungssprachen bestehen. Außerdem ist die Flexibilität von Sprache als das dem Menschen nächstliegende universelle Ausdrucksmittel gewünscht und bringt Vorteile mit sich.

Im Entstehungsprozess eines Prozessleitsystems eines Kraftwerks hat eine Anforderungsbeschreibung an das Prozessleitsystem eine sehr hohe Bedeutung, da sie die Grundlage und der Ausgangspunkt für die korrekte Erstellung des zum Teil extrem komplexen Prozessleitsystems ist. Sie bildet die Grundlage für eine funktionale Spezifikation, dann für den Entwurf des Prozessleitsystems, dann für dessen Realisierung und schließlich für den entwicklungsbegleitenden Test und die Integration. Darüber hinaus stellt die Anforderungsbeschreibung die Basis der vor der Markteinführung stattfindenden Tests dar.

In diesen Tests wird geprüft, ob das Prozessleitsystem, wie es schließlich erstellt ist, tatsächlich alle in der Anforderungsbeschreibung geforderten Anforderungen erfüllt. So wird geprüft, ob die schon ausgefeiltere funktionale Spezifikation des Prozessleitsystems den in der Anforderungsbeschreibung geforderten Funktionsumfang einschließlich der nichtfunktionalen Merkmale berücksichtigt. Hierbei verifizieren Entwicklungsingenieure die funktionale Spezifikation des Prozessleitsystems anhand der Anforderungsbeschreibung. In einem Markteinführungstest wird wiederum geprüft, ob das letztendlich realisierte Prozessleitsystem der funktionalen Spezifikation genügt. Testingenieure verifizieren hierfür das Prozessleitsystem anhand der funktionalen Spezifikation. Außerdem wird geprüft, ob das Prozessleitsystem auch der ursprünglichen Anforderungsbeschreibung genügt. Ist die Anforderungsbeschreibung unklar, so können Fehler im Prozessleitsystem vorhanden bleiben, ohne dass dies in den Tests auffällt.

Im Laufe eines Produktentstehungsprozesses eines Prozessleitsystems der Kraftwerksleittechnik kommen mehrere Personengruppen als Autoren und Leser mit der Anforderungsbeschreibung in Verbindung, beispielsweise Vertriebsmitarbeiter, externe Partner, Projektierungsingenieure, Produktmanager, Projektleiter, Entwicklungsmanager, Entwicklungsingenieure, Testingenieure und Wartungsingenieure. Es ist nicht zu erwarten, dass alle diese Personengruppen eine freie Textanforderung hinsichtlich ihrer technischen Merkmale exakt gleich interpretieren. Dies ist jedoch zur Entwicklung eines zuverlässigen Prozessleitsystems, das alle vom Kunden benötigten Anforderungen zuverlässig erfüllt, notwendig.

Der Entwicklungsprozess zur Realisierung eines Prozessleitsystems der Kraftwerksleittechnik unterscheidet sich prinzipiell in drei Phasen. Zunächst bringt beispielsweise ein Produktmanager auf Basis seines Verständnisses von Prozessleitsystemen in der Kraftwerkstechnik die generellen Anforderungen und speziellen Anforderungen der Kunden und des Markts in die Anforderungsbeschreibung ein. Nach einer solchen freien Textanforderung sieht der Produktentwicklungsprozess in der Regel eine Nachbearbeitung in Form eines Reviews vor und liefert eine bereits etwas präzisiertere Anforderungsspezifikation mit freien Textanforderungen.

In der zweiten Entwicklungsphase analysiert beispielsweise ein Entwicklungsmanager die freien Textanforderungen mit dem Ziel, je nach Komplexität des Prozessleitsystems eine oder mehrere funktionelle Spezifikationen zu erstellen. Häufig werden zusätzlich zu diesen funktionellen Spezifikationen auch so genannte Funktionslisten erstellt, die tabellarisch und stichwortartig eine Verbindung zwischen Anforderungen der Anforderungsbeschreibung und Spezifikationen aus Entwicklungssicht herstellen. Dies bezweckt, die Verfolgbarkeit herzustellen, also die Möglichkeit, in Tests genau zu überprüfen, ob auch wirklich alle Anforderungen der Anforderungsbeschreibung erfüllt sind.

Neben der freien Textanforderung werden im Folgenden auch eine Anforderungsspezifikation, eine funktionale Spezifikation oder eine textliche Spezifikation in einem anderen Stadium der Entwicklung des Prozessleitsystems als textlich formulierte Anforderungsbeschreibung bezeichnet.

In einer dritten Phase wird das Prozessleitsystem realisiert und getestet. Hierfür realisieren beispielsweise Entwicklungsingenieure das Prozessleitsystem auf Basis der funktionalen Spezifikation und der Funktionslisten und Testingenieure testen das Prozessleitsystem vor Auslieferung an die Kunden.

Da eine freie Textanforderung zu viele Möglichkeiten für unklare Formulierungen lässt, jedoch wegen ungenügender Akzeptanz und Kompetenz nicht auf Modellierungssprachen zurückgegriffen werden kann, ist es vorteilhaft, eine textlich formulierte Anforderungsbeschreibung hinsichtlich ihrer Sprache zu formalisieren. Anhand der Formalisierungsregeln können technisch mehrdeutige Textstellen erkannt und zur Überarbeitung ausgegeben werden.

Die Ausgabe kann hierbei an einen maschinellen Korrektureditor oder an eine formulierende Person gehen, sodass sowohl eine maschinelle als auch menschliche Korrektur denkbar ist. Durch die auf die Technik des Prozessleitsystems ausgerichteten Formulierungsregeln kann der freie Text gemäß der Formulierungsregeln formalisiert werden, wobei zweckmäßigerweise jeweils formalisierte Textpassagen in ihrer Gesamtbedeutung oder in der Bedeutung einzelner Wörter definiert sind, beispielsweise anhand einer Definitionsliste oder eines Wörterbuchs. Die technische Ausrichtung der Formulierungsregeln wird dadurch erreicht, dass die Regeln eine Untersuchung des Texts auf seine technische Aussage erlauben, beispielsweise auf eine Eindeutigkeit.

Das Verfahren wird zweckmäßigerweise mit Hilfe eines Computerprogramms ausgeführt, in dem die Formulierungsregeln hinterlegt sind, und das die textlich formulierte Anforderungsbeschreibung insbesondere selbständig, z.B. Passage für Passage, überprüft. Die Verarbeitung der zu überprüfenden textlich formulierten Anforderungsbeschreibung geschieht vorteilhafterweise in ASCII-Format. Hierdurch kann eine informationstechnische Lesbarkeit auch dann sichergestellt werden, wenn sich nach einigen Jahren Textverarbeitungsprogramme verändert haben. Hierdurch wird eine Dokumentation über einen langen Zeitraum erleichtert.

Eine Überprüfung der Anforderungsbeschreibung kann bereits geschehen, während eine Person den Text der Anforderungsbeschreibung eingibt. Zweckmäßigerweise wird die Überprüfung durch einen Eingabebefehl eines Bedieners gestartet, beispielsweise wenn dieser eine Passage der Anforderungsbeschreibung formuliert hat.

Das Computerprogramm gibt vorteilhafterweise zu einer technisch mehrdeutigen Textstelle zumindest einen Änderungsvorschlag aus, der die Mehrdeutigkeit behebt und eine technisch eindeutige Formulierung beinhaltet. Vorteilhafterweise ist ein Eingabefeld für eine Textveränderung einer mehrdeutigen Textstelle vorgesehen. Um eine Textformalisierung nicht aufzuzwängen, sondern in Einzelfällen freie Textanforderungen zuzulassen, erlaubt das Computerprogramm durch einen entsprechenden Eingabebefehl die Möglichkeit, eine Regelverletzung zu ignorieren und z.B. den Text zu belassen wie er ist.

Formulierungsregeln können Wörterbücher sein, in denen Begriffe definiert sind, oder solche, in denen Synonyme zugeordnet sind, so dass in einer Anforderungsbeschreibung stets der gleiche Begriff und nicht Synonyme verwendet werden. Formulierungsregeln können technische Beschreibungen von Begriffen sein, oder Regeln und Prinzipien, die im Requirement-Engineering, also bezüglich Anforderungen an Prozessleitsysteme der Kraftwerksleittechnik üblich sind.

Vorteilhafte weitere Ausführungsformen der Erfindungen weisen Lösungsmerkmale auf, mit denen zumindest ein Praxisproblem von den im Folgenden geschilderten Praxisproblemen bei Realisierung und Wartung von Prozessleitsystemen der Kraftwerksleittechnik behoben werden kann.

### Verbindlichkeit:

Initiale freie Textanforderungen entbehren häufig des klaren Ausdrucks einer eindeutigen Verbindlichkeit der Anforderungen. Selbst in den überarbeiteten freien Textanforderungen können klare Aussagen zur Verbindlichkeit der Anforderungen noch fehlen. Die Verbindlichkeit von Anforderungen wird deshalb im weiteren Verlauf der Entwicklung interpretiert und kann von der ursprünglich beabsichtigten oder mit Kunden vereinbarten Verbindlichkeit abweichen. Zweckmäßigerweise sind daher Verbindlichkeitswörter wie "muss", "sollte", "kann" in zumindest einer Formulierungsregel in ihrer Verbindlichkeit definiert. Werden in einer textlich formulierten Anforderungsbeschreibung undefinierte Ausdrücke zur Verbindlichkeit verwendet, so kann dies als technisch mehrdeutige Textstelle ausgegeben werden, mit dem Hinweis, dass eine Verbindlichkeit festgelegt werden muss, beispielsweise ob eine Anforderung unbedingt realisiert werden muss oder ob dieses im Ermessen der Entwicklung liegt. Vorteilhafterweise wird die textlich formulierte Anforderungsbeschreibung in mehrere einzelne Anforderungen aufgegliedert und jede der Anforderungen wird daraufhin überprüft, ob sie mit einem die Verbindlichkeit der Anforderung definierenden Wort versehen ist, dessen Definition in einer Formulierungsregel hinterlegt ist.

### Zusatzinformationen:

Anforderungsbeschreibungen können zusätzlich zu den eigentlichen Anforderungen auch Zusatzinformationen enthalten, beispielsweise Hardwarevoraussetzungen oder Beweggründe der Kunden zu bestimmten Anforderungen. Zusatzinformationen sind hierbei nicht unbedingt als Anforderungen zu werten und sind vorteilhafterweise als Zusatzinformationen zu kennzeichnen. Sie werden im weiteren Verlauf zweckmäßigerweise nicht nach den gleichen Formulierungsregeln überprüft und können beispielsweise nicht oder nur teilweise formalisiert sein. Vorteilhafterweise wird die textlich formulierte Anforderungsbeschreibung in Anforderungen, die überprüft werden, und Zusatzinformationen, die nicht überprüft werden, aufgeteilt.

### Komplexe Sachverhalte:

Anforderungsbeschreibungen sprechen häufig komplexe Sachverhalte in kurzen Worten an, lassen dabei aber große Interpretationsspielräume in nachfolgenden Entwicklungsphasen. Insgesamt besteht bereits zu Beginn der Entwicklung die Gefahr, dass Kommunikationsfehler schwerwiegende und kostenspielige Entwicklungsfehlleistungen bewirken. Um solche Probleme zu vermeiden, werden nach den Formulierungsregeln unklare Textstellen zweckmäßigerweise gemäß der Formulierungsregel so umformuliert, dass der umformulierte Text ausschließlich aus Anforderungen an das Prozessleitsystem besteht, die in den Formulierungsregeln eindeutig definiert sind. Eine Umformulierung kann als Änderungsvorschlag ausgegeben werden, der von einem Bediener bestätigt oder erneut geändert wird. Die Umformulierung kann auch automatisiert und ohne Bedienereingriff erfolgen.

### Synonyme:

Die Verwendung von synonymen Begriffen verringert die Eindeutigkeit einer textlich formulierten Anforderungsbeschreibung. Um dies zu vermeiden, wird die textlich formulierte Anforderungsbeschreibung zweckmäßigerweise auf Synonyme untersucht, die beispielsweise in Wörterbüchern oder Thesauren hinterlegt sein können. Werden Synonyme gefunden, so werden sie als unklare Textstellen ausgegeben, sodass überprüft werden kann, ob der gleiche Begriff oder tatsächlich unterschiedliche Begriffe gewollt sind.

### Nicht-atomare Anforderungen:

Freie Textanforderungen enthalten häufig in einem Absatz oder sogar in einem Satz mehrere von einander getrennt aufzufassende Anforderungen. Dies beeinträchtigt schon zu Beginn die klare Trennung von Anforderungen, insbesondere die Verfolgbarkeit einzelner Anforderungen hin zu Anforderungen in den funktionalen Spezifikationen. Mehrere in einem Satz zusammenhängende Anforderungen werden daher vorteilhafterweise getrennt bzw. atomisiert, sodass sie auch linguistisch eindeutig voneinander getrennt sind. Hierzu ist es vorteilhaft, wenn in der textlich formulierten Anforderungsbeschreibung mehrere in einem Satz zusammenhängend formulierte Anforderungselemente bzw. Anforderungen an das Prozessleitsystem in einzelne Anforderungen in jeweils einem Satz aufgebrochen werden.

### Wissensgebiete und Sprachwelten:

Kenntnisse aus mehreren Wissensgebieten sind unabdingbar für die Erstellung eines Prozessleitsystems. Allerdings befinden sich die in den verschiedenen Wissensgebieten arbeitenden Personengruppen häufig in unterschiedlichen Sprachwelten. Umfassende Erfahrungen mit Prozessleitsystemen in der Kraftwerksleittechnik einerseits und Detailwissen über informationstechnische oder technische Lösungen zur Realisierung der Anforderungen andererseits sind unter den beteiligten Personengruppen zwangsläufig inhomogen verteilt. Zur Lösung dieses Problems wird vorgeschlagen, dass einzelne Begriffe in den Formulierungsregeln technisch eindeutig definiert sind. Dies kann in technischen Beschreibungen zu Begriffen realisiert werden, die zu den Begriffen hinterlegt sind und als Erklärung dienen können. Unterschiedliche Sprachwelten werden auch in technischen Synonymen berücksichtigt, sodass ein Prozess oder Begriff, der in einer Sprachwelt in einer Form und in einer anderen Sprachwelt in einer anderen Form ausgedrückt wird, in einem Thesaurus oder Wörterbuch entsprechend mit seinen Formen berücksichtigt ist.

### Langzeitaspekte, Wissensmanagement und Dokumentationen:

Prozessleitsysteme für Kraftwerksleittechnik sind langlebige Investitionsgüter. Einzelne Komponenten müssen zum Teil bis zu zwanzig Jahre, im Nuklearbereich noch deutlich länger verfügbar sein. Häufig muss deshalb die Funktionalität im Laufe der Produktlebenszeit erneut entwickelt werden, wenn z.B. Hardware nicht mehr verfügbar ist oder einzelne Bauelemente abgekündigt werden oder abgekündigt worden sind. Wartungsarbeiten und Produktanpassungen erfolgen bei Prozessleitsystemen der Kraftwerksleittechnik in großem zeitlichem Abstand zur Phase der Anforderungsspezifikation bzw. Anforderungsbeschreibung. Wissensmanagement muss deswegen über jahrzehntelange Zeiträume betrieben werden können. Schlägt es fehl, dann kommt es zu der Situation, dass das System Funktionalitäten oder Merkmale aufweist, für deren Existenz aber keine Begründung mehr reproduziert werden kann. Sollen Modifikationen und Erweiterungen von Prozessleitsystemen der Kraftwerksleittechnik jahrzehntelang kostengünstig vorgenommen werden können, dann erfordert dies die informationstechnische Lesbarkeit des Datenformats, in dem die Anforderungsbeschreibung gespeichert ist. Das Datenformat ist daher zweckmäßigerweise ein ASCII-Format.

### Review-Effizienz und Review-Effektivität:

Anforderungsbeschreibungen für Prozessleitsysteme in der Kraftwerksleittechnik werden üblicherweise vor ihrer Freigabe an Reviewer aus den Bereichen Software, Vertrieb, Landesgesellschaft, Entwicklung und Abwicklung verteilt. Ihre Aufgabe ist es, fachliche und inhaltliche korrektive Änderungen, Ergänzungen oder Löschungen zur Anforderungsbeschreibung zu liefern. Die Richtigkeit und Fehlerfreiheit der technischen Aspekte kann nur aus dem Fach- und Domänenwissen des Reviewerkreises beurteilt und sichergestellt werden. Das Anforderungs-Engineering kennt zahlreiche grundsätzliche Regeln und Prinzipien zum Formulieren von Anforderungen. Diese können als Formulierungsregeln zur Überprüfung der textlich formulierten Anforderungsbeschreibung herangezogen werden. Entsprechendes Know-How fehlt oft den Autoren der textlich formulierten Anforderungsbeschreibung oder wird aus Zeitgründen nicht angewandt. Eine Regelverletzung durch einen Autor beeinträchtigt zum einen die Tätigkeit aller Reviewer, weil hierdurch die Merkmale der Verständlichkeit von Texten wie Einfachheit, Gliederung und Prägnanz des Anforderungstexts leidet. Dies wirkt sich auf die Effizienz des Reviews aus, denn weniger verständliche Texte lassen sich langsamer lesen als verständliche. Durch das Anwenden der Formulierungsregeln und das Umformulieren technisch mehrdeutiger Textstellen der Anforderungsbeschreibung kann diese leicht lesbar gestaltet werden und eine Korrekturarbeit der Reviewer erheblich verringern. Dies wirkt auch positiv auf die Effektivität, also den Erfolg des Reviews, denn Regelverletzungen können andere fachliche oder inhaltliche Defekte der Anforderungsbeschreibung überdecken, sodass diese nicht gefunden werden. Reviewkosten können hierdurch gesenkt werden und die Effektivität kann gesteigert werden.

In einem Ausführungsbeispiel der Erfindung verarbeitet eine werkzeuggestützte halbautomatische Nachbearbeitung textlich formulierter Anforderungsbeschreibungen für Prozessleitsysteme der Kraftwerksleittechnik Eingaben zweckmäßigerweise im ASCII-Format. Damit wird die informationstechnische Lesbarkeit sichergestellt. Das Computerprogramm inspiziert die Anforderungsbeschreibung anhand von Regeln und Prinzipien, die bezüglich Anforderungen an Prozessleitsysteme der Kraftwerksleittechnik üblich sind.

Außerdem ist die Erfindung gerichtet auf eine Vorrichtung zum Unterstützen der Erstellung einer Anforderungsbeschreibung eines Prozessleitsystems der Kraftwerksleittechnik. Die Vorrichtung umfasst erfindungsgemäß ein Datenverarbeitungsmittel, das dazu vorbereitet ist, eine textlich formulierte Anforderungsbeschreibung auf die Einhaltung von zuvor festgelegten Formulierungsregeln zu überprüfen und gemäß der Formulierungsregeln technisch mehrdeutige Textstellen zur Überarbeitung auszugeben.

Das Datenverarbeitungsmittel kann durch ein entsprechendes Computerprogramm auf die Durchführung der Überprüfung und Ausgabe vorbereitet sein. Dieses ist vorteilhafterweise so ausgeführt, dass ein, mehrere oder alle der oben beschriebenen Verfahrensschritte mit ihm ausführbar sind.

Die Erfindung wird im Weiteren durch einige Ausführungsbeispiele erläutert.

Eine textlich formulierte Anforderungsbeschreibung wird von einer Person über eine Tastatur in eine Datenverarbeitungsanlage mit einem Computerprogramm eingegeben.

Zunächst unterscheidet das Computerprogramm zwischen den eigentlichen Anforderungen und den sie erläuternden Zusatzinformationen. Dies kann dadurch geschehen, dass bereits die den Text eingebende Person zwischen den eigentlichen Anforderungen und den Zusatzinformationen unterscheidet und die beiden Gruppen durch eine zuvor festgelegte Kennzeichnung computerlesbar kennzeichnet. In einer fortgeschritteneren Variante untersucht das Computerprogramm selbst den eingegebenen Text darauf hin, ob ein Satz oder ein durch zumindest ein Komma getrennter Satzteil als Anforderung oder als Zusatzinformation zu werten ist. Dies kann durch einen semantischen Test erfolgen, beispielsweise eine Untersuchung auf die Wörter soll, kann, darf und dergleichen, die auf eine eigentliche Anforderung hindeuten, oder durch andere Wörter, die auf Zusatzinformationen hindeuten. Zweckmäßigerweise wird der Text der Anforderungsbeschreibung auf einem Bildschirm entsprechend markiert, beispielweise farblich, sodass der eingebende Bediener die Korrektheit der Analyse des Computerprogramms überprüfen und gegebenenfalls einen Status einer Anforderung oder einer Zusatzinformation in die andere Kategorie ändern kann.

Die Überprüfung der Anforderungsbeschreibung wird anschließend nur unter Zugrundelegung des Teils der Anforderungsbeschreibung durchgeführt, der die eigentlichen Anforderungen beinhaltet. Die Überprüfung wird anhand eines Regelkatalogs durchgeführt. Mehrdeutige Textstellen werden zur Überarbeitung ausgegeben, wobei der Bediener die Möglichkeit hat, die entsprechende Textstelle zu überarbeiten oder einen Überarbeitungshinweis zu ignorieren. Das Überarbeiten kann durch eine Veränderung eines Worts oder eines Teils eines Satzes geschehen. Ebenfalls ist es möglich, ein Wort neu zu definieren und einem Wörterbuch oder einem Thesaurus hinzuzufügen. Mit der Möglichkeit, Hinweise auch ignorieren zu können, wird Rücksicht auf die Akzeptanz bei den Beteiligten genommen. Ihnen bleibt es unbenommen, sich über Hinweise und Regeln des Requirement-Engineerings hinwegzusetzen. Hierdurch kann die Qualität einer Anforderungsbeschreibung verbessert werden, ohne eine Formulierung zu erzwingen. Wird eine Eingabe gemacht, dass eine mehrdeutige Textstelle bzw. eine dazugehörige Regel ignoriert werden soll, so überprüft das System, ob dieses Ignorieren zulässig ist. Denn es kann vorgesehen sein, dass nur einige Regeln des Regelkatalogs ignorierbar sind und andere nicht. Beispiel für eine Regel, die nicht ignoriert werden sollte, ist die Verbindlichkeit. Gibt ein Bediener das Ignorieren einer solchen Regel ein, so erfolgt ein Hinweis, dass das Ignorieren der Regel nicht zulässig ist und die mehrdeutige Textstelle bleibt zur Überarbeitung ausgegeben.

Die nachstehende Liste enthält eine Auswahl von Formulierungsregeln des Katalogs des Requirement-Engineerings, die speziell für Prozessleitsysteme in der Kraftwerkstechnik ausgewählt bzw. konkretisiert wurden und einer werkzeuggestützten halbautomatischen Nachbearbeitung textlich formulierter Anforderungsbeschreibungen zugänglich sind.

### Verbindlichkeit (R1)

Jede Anforderung muss eine definierte Verbindlichkeit besitzen. Die Verbindlichkeit von Anforderungen legt fest, welche Vereinbarung zwischen einerseits Produktmanagement und andererseits Produktentwicklung und Produkttest bezüglich der in dieser Anforderungsbeschreibung enthaltenen Anforderung getroffen werden. Beispielsweise kann die Verbindlichkeit durch die Verwendung der Begriffe "muss", "sollte", "kann", "darf nicht" und "sollte nicht" unterschieden werden und folgende Bedeutung bekommen:
- "muss" bedeutet eine Verpflichtung. Der Produktmanager stellt Anforderungen dieser Art bedingungslos. Entwickler müssen sie unbedingt erfüllen. Keine Abweichungen sind erlaubt.
- "sollte" bedeutet einen Wunsch. Die Realisierung von Anforderungen dieser Art wird gewünscht. Entwickler sollten diese Anforderung realisieren.
- "kann" bedeutet eine Möglichkeit, die vom Produktmanager vorgeschlagen wird. Anforderungen dieser Art sind optional. Sie können auch mögliche Realisierungsvorschläge sein. Entwickler entscheiden, ob die Anforderung realisiert wird und gegebenenfalls, ob die Realisierung in der vorgeschlagenen Weise oder anders erfolgt.
- "darf nicht". Solche Anforderungen verbieten ein Merkmal oder eine Eigenschaft zu realisieren oder eine bestimmte Lösung zu verwenden. Eine derartige Anforderung könnte in eine "muss"-Anforderung umgewandelt werden, jedoch hat sich die zusätzliche Möglichkeit des verbindlichen Ausschlusses in Portierungsprojekten als sinnvoll erwiesen, wenn in kurzer, prägnanter Weise ein aus der Vergangenheit bekanntes Merkmal oder eine Eigenschaft ausgeschlossen werden soll.
- "sollte nicht": Dieser Begriff in einer Anforderung empfiehlt, ein Merkmal auszuschließen bzw. eine Eigenschaft zu vermeiden oder eine bestimmte Lösung zu vermeiden. Eine derartige Anforderung könnte in eine "sollte" umgewandelt werden, jedoch hat sich auch hier die zusätzliche Möglichkeit des Ausschlusses in Portierungsprojekten als sinnvoll erwiesen.

Wird bei der Überprüfung des Texts eines dieser Wörter gefunden, so wird z.B. in einem Bildschirmfenster oder mit einer hervorgehobenen Markierung im Text die definierte Bedeutung des Wortes angezeigt und die Quittierung verlangt, dass diese Bedeutung tatsächlich gewünscht ist.

Bei der Formulierung der nachfolgenden Regeln wurde die Regel (R1) angewendet.

### Atomarität (R2)

Jede Anforderung sollte aus einem Satz bestehen, nicht aber mittels "und" an weitere Anforderungen gebunden sein. Mehrere Sätze eines Absatzes werden in einzelne Absätze mit jeweils nur einer Anforderung und gegebenenfalls erläuternden Zusatzinformationen, die selbst keine Anforderungen darstellen, umgewandelt. Hierzu kann ein Satz oder Satzteil daraufhin untersucht werden, ob er mehrere der unter R1 aufgelisteten Wörter enthält. Ist dies der Fall, so wird ein vermuteter Regelbruch der Atomarität ausgegeben und eine Trennung vorgeschlagen.

### Aktiv (R3)

Jede Anforderung sollte im Aktiv formuliert sein. Passive Formulierungen werden hervorgehoben und so angezeigt.

### Bezugspunkte (R4)

Eine Anforderung mit einem Komparativ oder einem Superlativ muss einen Bezugspunkt angeben. Soll beispielsweise ein System "schneller" sein, so soll auch angegeben werden als was es schneller sein soll. Der entsprechende Satz wird auf Komparative untersucht. Bei Vorliegen eines Komparativs wird ein Bezugspunkt gesucht, z.B. anhand des Wortes "als" und der Bezugspunkt wird zur Bestätigung markiert oder verlangt.

### Vollständige Bedingungen (R5)

Wird eine Bedingung angegeben, unter der ein System eine Eigenschaft aufweisen soll, dann muss auch angegeben werden, was gelten soll, wenn die Bedingung nicht zutrifft. Bedingungen können anhand des Worts "wenn" oder "Bedingung" oder dergleichen gefunden werden.

### Wörterbuch der Substantive (R6)

Die Bedeutung (Semantik) von Substantiven in Anforderungen sollte in einem Wörterbuch zur Anforderungsspezifikation definiert sein. Ein solches Wörterbuch kann domänenspezifisch sein, sodass technisch unterschiedlichen Domänen eines Prozessleitsystems jeweils unterschiedliche Wörterbücher zur Anforderungsbeschreibung zugewiesen sein können. Generell kann jedes im Text vorkommende Substantiv auf eine vorhandene Definition untersucht werden oder nur in einem speziellen, für dieses Verfahren erstellte Wörterbuch vorkommende Wörter, z.B. System, TXP, Anwender, Baugruppe, Archiv, Face-Plate.

### Wörterbuch der Adjektive (R7)

Adjektive in Anforderungen sollten in einem Wörterbuch, beispielsweise einem domänenspezifischen Wörterbuch, zur Anforderungsbeschreibung definiert sein. Dies trifft beispielsweise zu für folgende Adjektive: schnell, sicher, robust, einfach, ease of use, aufwandsarm. Begriffe wie z. B. "ease of use" oder "einfach" haben in der Vergangenheit völlig unterschiedliche Erwartungshaltungen ausgelöst. Nicht jedem Beteiligten war die Definition für einfach, nämlich mit höchstens vier Bedienoperationen, geläufig. In einer Anforderungsbeschreibung kann eine Anforderung z.B. lauten: TXP muss Eingangssignale von Analogbaugruppen einfach simulieren können. Das Wort "einfach" wird hervorgehoben definiert und es wird eine Bestätigung oder Änderung verlangt. Bei einer Änderung wird angegeben, dass die entsprechende Definition in den Text der Anforderungsbeschreibung aufgenommen werden soll.

### Wörterbuch der Verben (R8)

Die Bedeutung bzw. Semantik von Verben in Anforderungen sollte in einem domänenspezifischen Wörterbuch zur Anforderungsspezifikation definiert sein. Beispiele für domänenspezifisch festgelegte Verben sind: quittieren, simulieren, melden, anzeigen, drucken, laden. Ansonsten kann die Überprüfung wie oben beschrieben vorgehen.

### Nominalisierungen (R9)

Substantive, die einen Vorgang oder Prozess bezeichnen und etwas nicht Gegenständliches beschreiben, also so genannte Nominalisierungen, sollten in Anforderungen als mehrdeutige Textstellen ausgegeben werden. Die Vorgänge oder Prozesse, die die Substantive beschreiben, sollten entweder als weitere Anforderungen näher beschrieben werden oder die Substantive sollten erst nach geleisteter Definition im Wörterbuch der Substantive verwendet werden.

### Nebensätze umwandeln (R10)

Nebensätze sollten entweder eigene Anforderungssätze werden oder als Kommentar der Anforderung beigestellt werden. Eine entsprechende Klarstellung wird verlangt.

### Formulierungsschablonen (R11)

Einzelne Anforderungen einer Anforderungsbeschreibung sollten mit Hilfe von Schablonen formuliert werden. Solche Schablonen sind als Formulierungsregeln hinterlegt. Es werden beispielsweise drei verschiedene Schablonen unterschieden für selbständige Systemaktivitäten, für Benutzerinteraktionen und für Systemaktivitäten in Abhängigkeit anderer Systeme:
- Selbständige Systemaktivität (a):
   {das System} MUSS|SOLLTE|KANN|DARF NICHT|SOLLTE NICHT <Objekt und Ergänzungen des Objekts> <Prozesswort im Infinitiv>
   Selbständige Systemaktivitäten unter einer Bedingung (b) :
   [Wann?] [Unter welchen Bedingungen?]
   MUSS|SOLLTE|KANN|DARF NICHT|SOLLTE NICHT {das System}
   <Objekt und Ergänzungen des Objekts> <Prozesswort im Infinitiv>
- Benutzerinteraktion (a):
   {das System} MUSS|SOLLTE|KANN|DARF NICHT|SOLLTE NICHT
   <wem> DIE MÖGLICHKEIT BIETEN <Objekt und Ergänzungen des Objekts> <Prozesswort im Infinitiv>
   Benutzerinteraktion unter einer Bedingung (b):
      [Wann?] [Unter welchen Bedingungen?]
      MUSS|SOLLTE|KANN|DARF NICHT|SOLLTE NICHT {das System}
      <wem> DIE MÖGLICHKEIT BIETEN <Objekt und Ergänzungen des Objekts> <Prozesswort im Infinitiv>
- Systemaktivitäten in Abhängigkeit anderer Systeme (a):
   {das System} MUSS|SOLLTE|KANN|DARF NICHT|SOLLTE NICHT FÄHIG SEIN <Objekt und Ergänzungen des Objekts> <Prozesswort im Infinitiv>
   Systemaktivitäten in Abhängigkeit anderer Systeme unter einer Bedingung (b):
      [Wann?] [Unter welchen Bedingungen?]
      MUSS|SOLLTE|KANN|DARF NICHT|SOLLTE NICHT {das System} FÄHIG SEIN <Objekt und Ergänzungen des Objekts> <Prozesswort im Infinitiv>

Bei der werkzeuggestützten, also durch ein Computerprogramm ausgeführten, und halbautomatischen, also mit Bedienerantworten arbeitenden, oder automatischen Nachbearbeitung textlich formulierter Anforderungsbeschreibungen für Prozessleitsysteme der Kraftwerkstechnik werden zweckmäßigerweise nicht alle Regeln sofort auf einen Textabschnitt der freien Textanforderung angewandt. Grund dafür ist, dass ein stark verbesserungsbedürftiger Text, der viele Regeln verletzt, schwer zu verbessern ist, wenn die Regelbrüche im fortlaufenden Text durcheinander angegeben werden. Es ist daher vorteilhaft, die Regeln hintereinander oder die Regeln gruppenweise hintereinander auf die gesamte textlich formulierte Anforderungsbeschreibung oder Teile davon anzuwenden, beispielsweise zuerst Regel 1 auf die gesamte Anforderungsbeschreibung, dann Regel 2, usw. oder zunächst eine erste Gruppe von Regeln, z.B. Regeln 1 und 2, gemeinsam und in einem weiteren Schritt eine weiter Gruppe von Regeln und in einem dritten Schritt wiederum eine weiter Gruppe von Regeln, wobei eine Gruppe in diesem Zusammenhang eine oder mehr Regeln umfassen kann. Es werden daher sukzessive vorteilhafterweise Untermengen der Regeln angewandt. Dieses Vorgehen hilft, über mehrere, z.B. vier Formulierungsstufen einer textlich formulierten Anforderungsbeschreibung zu einer strukturierten Anforderungsbeschreibung zu gelangen, beispielsweise zunächst von einer
- Initialen freien Textanforderung zu einer
- freien Textanforderung, von dieser zu einer
- Textanforderung und schließlich zu einer
- strukturierten Textanforderung.

Ein solches stufenweises Vorgehen kann wie folgt durchgeführt werden:

### Initiale freie Textanforderung bearbeiten

Auf der ersten Stufe wird sichergestellt, dass Anforderungen eine definierte Verbindlichkeit enthalten. Ausnahmen sind hierbei nicht zugelassen. Außerdem weist das Computerprogramm auf zusammengesetzte und mit "und" verknüpfte Anforderungen in der initialen freien Textanforderungen hin, damit der Anwender interaktiv separate, einzelne freie Textanforderungen entstehen lassen kann. Regeln, die zuerst angewendet werden, sind somit:
(R1) Verbindlichkeit
(R2) Atomarität

### Freie Textanforderungen bearbeiten

Auf der zweiten Stufe soll der Anwender angehalten werden, eine weitere Gruppe von elementaren Regeln des Requirements-Engineerings für die Formulierung von Anforderungen zu berücksichtigen, um die Testbarkeit zu erhöhen, ohne jedoch ihn schon in seiner Wortwahl auf die domänenspezifisch definierten Begriffe hinzuführen. Die auf die freien Textanforderungen angewendeten Regeln zum Erreichen der Stufe der Textanforderungen sind:
(R3) Aktiv
(R4) Bezugspunkte
(R5) Vollständige Bedingungen
(R9) Nominalisierungen
(R10) Nebensätze umwandeln

### Textanforderungen bearbeiten

Auf dem Weg von der dritten zur vierten Stufe soll zum einen das Vokabular der Textanforderungen auf das domänenspezifische Vokabular eingeschränkt werden, um weitere Ausdrucksklarheit zu erreichen. Bisher erfolgten Definitionen häufig "lokal" in den jeweiligen Anforderungsbeschreibungen und damit war eine einheitliche Verwendung der Begriffe weder in den Projekten noch in einer gesamten Domäne, beispielsweise der Prozessleitsysteme für Kraftwerkstechnik, gesichert. Zum anderen sollen selbständige Systemaktivitäten, Benutzerinteraktionen und Systemaktivitäten in Abhängigkeit anderer Systeme in den Anforderungen explizit voneinander unterscheidbar werden.
(R6) Wörterbuch der Substantive
(R7) Wörterbuch der Adjektive
(R8) Wörterbuch der Verben
(R11) Anforderungsschablonen

In einigen konkreten Beispielen sind im Folgenden einige Funktionalitäten des Verfahrens erläutert.

Eine initiale textlicht Anforderungsbeschreibung lautet in einem Ausschnitt:
ID 283: ES 680 muss es ermöglichen, dass die Quelle, aus welcher der Zeitstempel für die fehlersicheren Lösungen übernommen wird, projektierbar ist.

Dieser Text wird im ersten Prüfungsschritt hinsichtlich der Atomarität (R2) als unklar ausgegeben, da zwei Objekte mit einer Bedingung verbunden sind:
ID 283: ES 680 muss es ermöglichen, dass die Quelle aus welcher der Zeitstempel übernommen wird, projektierbar ist.

Auf diese Ausgabe hin wird der Text von einem Vertriebsmitarbeiter z.B. wie folgt umgeschrieben:
ID 283: Die Quelle, aus welcher der Zeitstempel übernommen wird, muss projektierbar sein.
ID 284: ES 680 muss dies ermöglichen.

Dieser Text wird in einem zweiten Prüfungsschritt unbeanstandet gelassen, jedoch im dritten Prüfungsschritt beanstandet, weil ein Wörterbuch (R6) zum Substantiv "Zeitstempel" eine Zielangabe verlangt. Der Vertriebsmitarbeiter ergänzt nun den Text:
ID 283: Die Quelle, aus welcher der Zeitstempel für den APT-S7 übernommen wird, muss projektierbar sein.
ID 284: ES 680 muss dies ermöglichen.

Dieser Text wird nun erneut im ersten Schritt (ohne Beanstandung), dann im zweiten Schritt (ohne Beanstandung) und dann im dritten Schritt geprüft, wobei im Wörterbucheintrag zur Steuerung APT-S7 gefunden wird, dass diese auch ohne Zeitstempelfunktion möglich ist. Hierauf wird ein entsprechender Hinweistext zu dem markierten Text ausgegeben. Der Vertriebsmitarbeiter ergänzt nun den Text erneut:
ID 283: Die Quelle, aus welcher der Zeitstempel für den APT-S7 übernommen wird, muss projektierbar sein.
ID 284: ES 680 muss dies ermöglichen.
ID 285: Bei APT-S7-Lösungen mit SIMATIC S7-400H ohne Zeitstempelung in der S7-400H muss die Zeitstempelung im AS 620B-S7 erfolgen.

Erneut wird der überarbeitete Text im Dreischritt überprüft, wobei der Begriff "projektierbar" im dritten Schritt als unklar ausgegeben wird. Das Programm schlägt nun Thesauruseinträge vor, z.B. "konfigurierbar". Der Vertriebsmitarbeiter kann nun diese zulässigen Begriffe im Wörterbuch auf ihre Definition nachschlagen und ändert den Text nun in:
ID 283: Die Quelle, aus welcher der Zeitstempel für den APT-S7 übernommen wird, muss konfigurierbar sein.
ID 284: ES 680 muss dies ermöglichen.
ID 285: Bei APT-S7-Lösungen mit SIMATIC S7-400H ohne Zeitstempelung in der S7-400H muss die Zeitstempelung im AS 620B-S7 erfolgen.

Diese Textpassage ist klar und rügefrei.

Bei einem nächsten Beispiel lautet die initiale Textanforderung:
"Das Datenhandling, die Datenstrukturen sowie die Datenablage in den Teilsystemen dürfen gegenüber TXP nur soweit verändert werden, wie dies durch die SIMATIC S7 Hardware unbedingt notwendig ist."

Bei der ersten Prüfung auf Verbindlichkeit (R1) wird das Wort "dürfen" gefunden. Dieses steht jedoch nicht im Kontext "darf nicht", sondern zusammen mit "nur soweit ... wie". Diese Forderung ist nur mit einer Definition eines Bezugspunkts klar (R4), da das Wort "wie" einen Bezugspunkt verlangt. Somit ist die Verbindlichkeit an einen Bezugspunkt geknüpft. Eine solche Anforderung führt leicht zu Unklarheiten. Der Text wäre daher zu überarbeiten.

Unabhängig von dieser Unklarheit bzw. Mehrdeutigkeit würde eine weitere Passage zur Überarbeitung ausgegeben werden, nämlich "unbedingt notwendig ist". Auch in dieser Formulierung ist eine Verbindlichkeit (R1) beschrieben, und zwar durch das Wort "notwendig". Dieses Wort ist jedoch nicht zulässig, da es nicht klar ist. In diesem Fall wäre es einem Entwicklungsingenieur für Software überlassen, zu entscheiden, was unbedingt notwendig ist oder bei einen ggf. großen Programmieraufwand doch nicht zwingend notwendig wäre.

In einem weiteren Beispiel:
"AS 620B-S7 hat zur Ankopplung die notwendigen S7-konformen Schnittstellen zur Verfügung zu stellen."
wird wiederum bei der Überprüfung der Verbindlichkeit (R1) der Begriff "hat" als keine zulässige Verbindlichkeitsdefinition und damit als unklar ausgegeben. Er kann leicht durch "muss" ersetzt werden.

In einem zweiten Überprüfungsdurchgang wird die Anforderung der Schnittstellen als nicht vollständig erkannt (R5). Denn im Wörterbuch ist zu "Schnittstellen" vorgegeben, dass diese spezifiziert sein müssen. So ist anzugeben, welche Schnittstellen und für welche Datenformate gemeint sind.

Im Folgenden ist ein Beispiel für ein Substantive-Wörterbuch für einen Bediener dargestellt, wobei selbstverständlich nur ein kleiner Teil des gesamten Wörterbuchs dargestellt ist. Das Wörterbuch dient zur Definition von Substantiven.

| | |
|---|---|
| ID 1305: | "Bussystem" ist der Oberbegriff für Anlagenbus, Terminalbus und Multimediabus. |
| ID 1306: | "Look and Feel" ist die Art und Weise der Gestaltung der Benutzeroberfläche und der Dialogformen mit dem Benutzer (Masken, Menüs, Inhalte, Dialogmöglichkeiten, Dialogreihenfolge). Es ist eine stilistische Eigenschaft. |
| ID 1308: | "TXP-Kommunikationsmechanismen" ist der Oberbegriff für "Zustandsübertragung, Bedienung und Ereigniskommunikation" |
| ID 1309: | Ein "Referenzprojekt" besteht aus der Referenzkonfiguration und der Referenzprojektierung. |
| ID 1310: | Die Ausgangsbasis für die Portierung von TXP auf TXP S7 ist TXP Release 7.7. |
| ID 1311: | Eine "Mischanlage" ist eine TXP-Anlage bestehend aus Automatisierungsgeräten AS 620B und AS 620B-S7. |
| ID 1312: | Unter "Projektierung" (Tätigkeit: projektieren) wird bei TXP die Erstellung der Funktionspläne der Einzelleitebene YFR, Gerätedispositionspläne YDM und YDR sowie der Topologieplan YDH verstanden. Das Ergebnis der Projektierung ist ladbarer und ablauffähiger Code sowie Struktur- und Parametrierinformation und deren Dokumentation. Gerätedispositionspläne und Topologiepläne beschreiben die Konfiguration. |
| ID 1313: | "Bestehende Funktionalität" ist die Funktionalität, die vom TXP-System Release 7.7 unterstützt wird. |
| ID 1314: | "Bestehende Funktionalität nicht verändern dürfen" bedeutet, dass die Funktionalität unverändert unterstützt werden muss und die "neue Funktionalität" additiv zu integrieren ist. |
| ID 1315: | "Neben bestehender Funktionalität neue Funktionen schaffen" bedeutet nicht "Bestehende Funktionalität zu verändern". |
| ID 1316: | SIM umfasst bei TXP die Gesamtheit aller ET-Module (ET 200U, ET 200B und ET 200M). Für detailliertere Spezifikationen werden die Bezeichnungen ET 200U, ET 200B und ET 200M verwendet. |

Ein Beispiel für einen Eintrag in ein Wörterbuch der Adjektive kann sein

| | |
|---|---|
| ID 1307: | "mindestens" wird bei Anforderungen verwendet, wenn eine gleiche oder bessere Eigenschaft gefordert wird. |

Andere Wörterbücher werden vom Programm direkt genutzt und bilden Verknüpfungen von Begriffen (Substantiven, Verben, Adjektiven, usw.) zu Bedingungen oder Anforderungen, so dass erkannt werden kann, wenn eine Bedingung nicht vollständig ist.

Mit Hilfe des beschriebenen Verfahrens werden beispielsweise Vertriebsingenieure oder Produktmanager als Autoren von textlich formulierten Anforderungsbeschreibungen beim Überarbeiten ihrer Texte unterstützt, bevor diese Texte in die weitere Bearbeitung gegeben werden. Praxisprobleme mit Anforderungsbeschreibungen aus dem Bereich der Prozessleitsysteme für Kraftwerksleittechnik bei der Realisierung und Wartung der Prozessleitsysteme werden vermieden.

Außerdem unterstützt das erfindungsgemäße Verfahren Reviewer von textlich formulierten Anforderungsbeschreibungen, beispielsweise Projektleiter, Entwicklungsingenieure (Elektrotechnik, Software), Testingenieure (Elektrotechnik, Software), Wartungsingenieure (Elektrotechnik, Software) beim Review, also Korrekturlesen, von Anforderungsdokumenten.

Des weiteren unterstützt das erfindungsgemäße Verfahren Entwicklungsingenieure aus den Bereichen Elektrotechnik und Software als Autoren der funktionalen Anforderungsspezifikationen dabei, diese funktionalen Anforderungen so aus einer textlich formulierten Anforderungsbeschreibung abzuleiten, dass die funktionale Spezifikation konsistent mit der zugehörigen textlich formulierten Anforderungsbeschreibung ist.

## Patentansprüche

1. Verfahren zum Unterstützen der Erstellung einer Anforderungsbeschreibung eines Prozessleitsystems der Kraftwerksleittechnik, bei dem eine textlich formulierte Anforderungsbeschreibung auf die Einhaltung von zuvor festgelegten und auf die Technik des Prozessleitsystems ausgerichteter Formulierungsregeln überprüft wird und gemäß der Formulierungsregeln technisch mehrdeutige Textstellen zur Überarbeitung ausgegeben werden.

2. Verfahren nach Anspruch 1,
**dadurch gekennzeichnet, dass** nach den Formulierungsregeln unklare Textstellen gemäß der Formulierungsregeln so umformuliert werden, dass der umformulierte Text ausschließlich solche Anforderungen an das Prozessleitsystem enthält, die in den Formulierungsregeln eindeutig definiert sind.

3. Verfahren nach Anspruch 1 oder 2,
**dadurch gekennzeichnet, dass** in der textlich formulierte Anforderungsbeschreibung mehrere in einem Satz zusammenhängend formulierte Anforderungen an das Prozessleitsystem in einzelne Anforderungen in jeweils einem Satz aufgebrochen werden.

4. Verfahren nach einem der vorhergehenden Ansprüche,
**dadurch gekennzeichnet, dass** die textlich formulierte Anforderungsbeschreibung in mehrere einzelne Anforderungen aufgegliedert wird und jede der Anforderungen daraufhin überprüft wird, ob sie mit einem die Verbindlichkeit der Anforderung definierenden Wort versehen ist, dessen Definition in einer Formulierungsregel hinterlegt ist.

5. Verfahren nach einem der vorhergehenden Ansprüche,
**dadurch gekennzeichnet, dass** die textlich formulierte Anforderungsbeschreibung auf Komparative mit fehlendem Bezugspunkt untersucht wird.

6. Verfahren nach einem der vorhergehenden Ansprüche,
**dadurch gekennzeichnet, dass** die textlich formulierte Anforderungsbeschreibung auf eine an eine Bedingung geknüpfte Anforderung untersucht wird, zu der eine Anweisung fehlt, die beschreibt, welche Anforderung bei nicht erfüllter Bedingung gelten soll.

7. Verfahren nach einem der vorhergehenden Ansprüche,
**dadurch gekennzeichnet, dass** die textlich formulierte Anforderungsbeschreibung auf Substantive untersucht wird, deren Bedeutung nicht in einer Liste definiert ist.

8. Verfahren nach einem der vorhergehenden Ansprüche,
**dadurch gekennzeichnet, dass** die textlich formulierte Anforderungsbeschreibung auf Adjektive untersucht wird, deren Bedeutung nicht in einer Liste definiert ist.

9. Verfahren nach einem der vorhergehenden Ansprüche,
**dadurch gekennzeichnet, dass** die textlich formulierte Anforderungsbeschreibung auf die Formulierung der einzelnen Anforderungen in einer schablonenartigen Form untersucht wird.

10. Verfahren nach einem der vorhergehenden Ansprüche,
**dadurch gekennzeichnet, dass** die textlich formulierte Anforderungsbeschreibung in Anforderungen, die überprüft werden, und Zusatzinformationen, die nicht überprüft werden, aufgeteilt wird.

11. Verfahren nach einem der vorhergehenden Ansprüche,
**dadurch gekennzeichnet, dass** die textlich formulierte Anforderungsbeschreibung stufenweise mit jeweils Untergruppen von Regeln überprüft werden, wobei nach jeder Überprüfungsstufe unklaren Textstellen verändert werden bevor mit der Überprüfung in der nächsten Stufe begonnen wird.

12. Verfahren nach einem der vorhergehenden Ansprüche,
**dadurch gekennzeichnet, dass** Änderungsvorschläge ausgegeben werden.

13. Vorrichtung zum Unterstützen der Erstellung einer Anforderungsbeschreibung eines Prozessleitsystems der Kraftwerksleittechnik, mit einem Datenverarbeitungsmittel, das dazu vorbereitet ist, eine textlich formulierte Anforderungsbeschreibung auf die Einhaltung von zuvor festgelegten Formulierungsregeln zu überprüfen und gemäß der Formulierungsregeln technisch mehrdeutige Textstellen zur Überarbeitung auszugeben.
